# EUROPEAN PATENT APPLICATION

(11) **EP 2 979 780 A1**
(43) Date of publication of application: **03.02.2016**
(21) Application number: 14776277.7
(22) Date of filing: 24.03.2014
(51) Int. Cl.: B22F 1/00, B22F 5/00, B22F 9/08, C22C 1/04, C22C 9/00, F16D 69/02

(54) **COPPER ALLOY POWDER, SINTERED COPPER ALLOY BODY AND BRAKE LINING FOR USE IN HIGH-SPEED RAILWAY**

(30) Priority: 25.03.2013 JP 2013061381
(71) Applicant: Nippon Steel & Sumitomo Metal Corporation, Tokyo 100-8071 (JP)
(72) Inventor: KATSUKI, Futoshi, Tokyo 100-8071 (JP); ISHIMOTO, Fumio, Tokyo 100-8071 (JP); KANDA, Osamu, Tokyo 100-8071 (JP); ASABE, Kazutaka, Tokyo 100-8071 (JP); ADACHI, Go, Tokyo 100-8071 (JP); FUJII, Toshiyuki, Tokyo 152-8550 (JP)
(74) Representative: Zimmermann & Partner Patentanwälte mbB
(86) International application number: PCT/JP2014/058089
(87) International publication number: WO 2014/157089

(57) **Abstract**

A sintered friction material for use in a high-speed railway is manufactured using a Cu alloy powder produced using an atomizing method from a Cu alloy containing 0.1 to 2.0 mass% of Fe. This friction material has both sufficient high strength and high thermal conductivity.

## Description

### TECHNICAL FIELD

The present invention relates to a Cu alloy powder, a sintered Cu alloy body, and a brake lining for use in a high-speed railways.

### BACKGROUND ART

Sintered materials obtained by compacting and sintering metal powder are used in base materials such as brake lining material and disc brake pad material, which are used in high-speed railway carriages. In particular, Cu has high thermal conductivity, and it is therefore often used in lining materials for use in high-speed railways due to the fact that the interface temperature at a time when friction is generated can be reduced. In view of the wear properties, the addition of Fe is also considered.

Patent Documents 1 to 4 disclose examples of using a Cu-Fe alloy in brakes/friction materials. Also, Patent Documents 5 and 6 disclose a technique of uniformly and finely dispersing Fe in Cu by ultrasonic agitation or rapid cooling when cooling a high-temperature melt obtained by mixing Cu and Fe.

### LIST OF PRIOR ART DOCUMENTS

### PATENT DOCUMENTS

Patent Document 1: JP 2009-102583A
Patent Document 2: JP H1-320329A
Patent Document 3: JP H5-86359A
Patent Document 4: JP 2006-16680A
Patent Document 5: JP H6-17163A
Patent Document 6: JP H11-131111A

### DISCLOSURE OF THE INVENTION

### PROBLEMS TO BE SOLVED BY THE INVENTION

In all of the above-mentioned Patent Documents, 5% or more of Fe is contained in the Cu. Such addition of a large amount of Fe is effective for strengthening a Cu alloy, but there are problems in that it reduces the thermal conductivity of the Cu alloy. In particular, the temperature of a brake lining for use in a high-speed railway such as the Shinkansen line rises to around 800°C during braking, and therefore there has been demand for superior high thermal conductivity in particular.

The present invention has been made in order to resolve such problems in the conventional techniques and it is an object thereof to obtain a sintered material that can have both high strength and high thermal conductivity needed in a friction material, at a low cost.

### MEANS FOR SOLVING THE PROBLEMS

In order to achieve the above-described object, after in-depth consideration, the inventors of the present application have obtained the following findings.

(a) In order to improve wear resistance of a sintered material, it is effective to increase the strength of the material by increasing its hardness, for example.

(b) The strength of a sintered material decreases at high temperatures. Accordingly, it is preferable to use a sintered material that has high thermal conductivity and whose frictional interface temperature is easily reduced.

After further consideration based on the findings described above, the inventors of the present application obtained the following findings.

(c) The inventors developed a technique for obtaining a sintered material from a mixed powder obtained by adding Fe powder to Cu powder. This technique exhibits superior high braking power due to the similar-composition metal contact effect when the Fe particles included in the sintered lining rub against a steel disk. However, it is difficult to mix evenly when adding the Fe powder to the Cu powder, and as a result, the particle diameter of the Fe particles in the sintered material increase in size, making them difficult to disperse evenly throughout the entirety of the sintered material. Thus, presuming that a mixed powder obtained by adding Fe powder to Cu powder is to be used, the particle diameter of the Fe particles will comparatively increase, and the strength of portions with many Fe particles will be higher, but the strength of portions with few Fe particles will remain low, and as a result, the base material of the sintered body is not likely to be strengthened and the Fe will become a source of heat.

(d) In view of this, it is effective to use a Cu alloy powder including a small amount of Fe as the raw material for sintering. This is because fine Fe particles can be evenly dispersed in the sintered material and the base material can be strengthened by using a Cu alloy powder instead of the Cu powder. Also, the Cu alloy powder is such that fine particles of Fe are precipitated in the Cu because the Cu and Fe do not form a solid solution with each other. Thus, if a Cu alloy powder including a small amount of Fe is used, the Fe particles are surrounded by Cu, which has high thermal conductivity, and therefore it is easier to dissipate frictional heat, and a rise in the frictional interface temperature can be suppressed.

(e) If the amount of Fe included in the Cu alloy powder is too high, the hardness will increase, but the Fe particles will be too large, resulting in a decrease in the thermal conductivity. Accordingly, it is necessary to set an appropriate Fe content in view of balancing the strengthening of the Cu alloy and the thermal conductivity.

The present invention has been made based on the above-described findings and has the following features.

(1) A Cu alloy powder to be used for manufacturing a sintered friction material for use in a high-speed railway, the Cu alloy powder being manufactured by atomizing a Cu alloy containing 0.1 to 2.0 mass% of Fe.

(2) A sintered Cu alloy obtained by compacting and sintering a powder including the Cu alloy powder described above in (1).

(3) The sintered Cu alloy described above in (2), wherein an average particle diameter of Fe particles included in the sintered Cu alloy body is 5 µm or less.

(4) The sintered Cu alloy body described above in (2) or (3), wherein a sintering temperature is 1083°C or less.

(5) A brake lining for use in a high-speed railway, in which the sintered Cu alloy body described above in one of (2) to (4) is used.

### ADVANTAGEOUS EFFECTS OF THE INVENTION

According to the present embodiment, a sintered material that can have both high strength and high thermal conductivity needed in a friction material can be obtained at a low cost. The obtained sintered material has superior high wear resistance, and therefore is optimal for use in a sintered friction material for use in a high-speed railway, such as a brake lining for use in a high-speed railway.

### BRIEF DESCRIPTION OF THE DRAWINGS

[Figure 1]

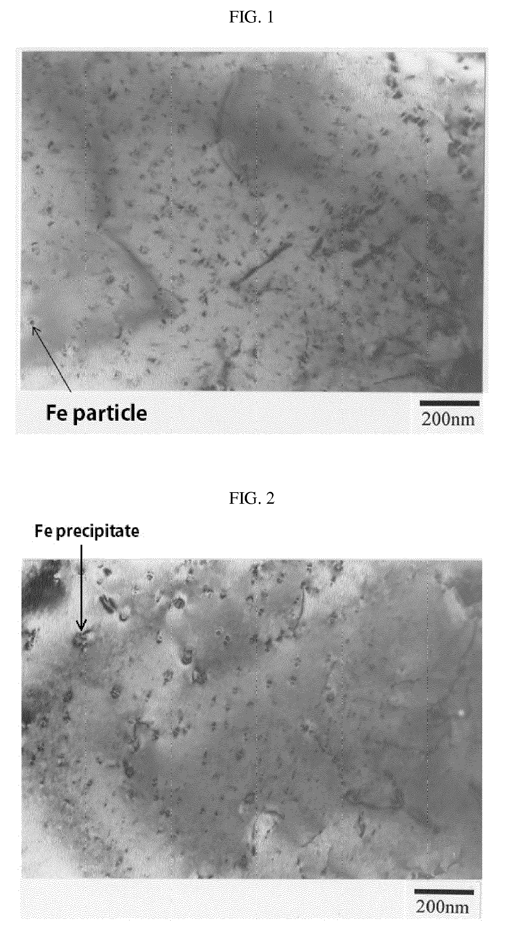

   FIG. 1 is a TEM photograph of Example 6 of the present invention.
[Figure 2]
   FIG. 2 is a TEM photograph of Comparative Example 9.

### MODE FOR CARRYING OUT THE INVENTION

A Cu alloy powder of the present invention is a raw material for obtaining a sintered Cu alloy body by compacting and sintering using powder metallurgy, and the obtained sintered Cu alloy body undergoes necessary processing so as to be used as a friction material for use in a high-speed railway. The Cu alloy powder contains 0.1 to 2.0 mass% of Fe.

Fe has an effect of improving the strength (hardness) of the Cu alloy. In order to obtain this effect, an Fe content of 0.1% or more is used. On the other hand, since Fe has inferior thermal conductivity, it is likely to cause an increase in temperature during braking in a high-speed railway, or the like if the Fe content is excessive. However, if an Fe content of 2.0% or less is used, a Cu alloy powder in which fine particles of Fe are precipitated in Cu having high thermal conductivity can be obtained, which makes it easier to dissipate frictional heat, and as result, a rise in the temperature of the frictional interface can be suppressed. It is preferable that the lower limit of the Fe content is set to 0.1% and the upper limit is set to 1.0%.

The Cu alloy powder of the present invention may contain 0.1 to 2.0% of Fe, with the remainder being composed of Cu, or, in addition to Fe, the Cu alloy powder may contain a small amount of Ti, for example, which provides Fe with wettability with respect to Cu. Here, if an excessive amount of Ti is included, there is a risk that cracks will appear in the particles. Accordingly, in the case of containing Ti, it is desirable that the Ti content is set to 0.01 mass% or less. Also, the Cu alloy powder of the present invention may include impurities, but if a large amount of impurities are included, there is a risk that the high thermal conductivity, which is an object of the present invention, will be impaired. Accordingly, it is desirable that oxygen-free Cu is used for Cu and an electrolytic Fe powder (e.g. ATOMFE, manufactured by Toho Zinc) is used for Fe.

Note that "impurities" means components mixed into various raw materials, components mixed in during the process of manufacturing the alloy powder, and the like. Impurities are allowed as long as they fall within the following ranges. That is to say, C: 0.03 mass% or less, Si: 0.01 mass% or less, Mn: 0.03 mass% or less, P: 0.01 mass% or less, S: 0.03 mass% or less, As: 0.003 mass% or less, Sb: 0.005 mass% or less, Bi: 0.001 mass% or less, and Pb: 0.005 mass% or less are allowed.

The Cu alloy powder according to the present invention is manufactured using an atomizing method. For example, it is preferable to melt the raw material for the Cu alloy adjusted to the above-described chemical composition using an induction heating furnace, extract the obtained molten Cu alloy by a nozzle at the bottom of the furnace, and rapidly cool it in the process of causing it to free fall, or spray a jet fluid onto the molten Cu alloy, thereby making it granular.

The Cu alloy powder according to the present invention is manufactured using rapid solidification according to an atomizing method, and therefore Fe included in the alloy exists in a state of being a solid solution or being finely precipitated at the nano-scale in the Cu.

It is preferable that the average particle diameter of the Cu alloy powder according to the present invention is within a range of 63 µm or less. If the average particle diameter of the Cu alloy powder is too large, there will be a problem in that sintering will be difficult. On the other hand, if the average particle diameter of the Cu alloy powder is too small, there will be a problem in that the yield will markedly decrease when manufacturing using an atomizing method, and therefore it is preferable that the average particle diameter is set to 35 µm or more.

When manufacturing a sintered Cu alloy body from the above-described Cu alloy powder, a method that is normally employed can be used, and there are no particular restrictions. The Cu alloy powder adjusted to the predetermined chemical composition is classified and filled in a metallic molding die so as to be subjected to powder compacting at a predetermined pressure, and thereafter, heating processing is performed in an inert gas atmosphere.

It is preferable that the sintering temperature is set to 1083°C or less. This is because if sintering is performed at a temperature exceeding 1083°C, there is a risk that only the Cu in the Cu alloy will melt and the Fe will aggregate in the Cu solidification process, resulting in the average particle diameter of the Fe being too large. Since sintering does not occur if the sintering temperature is too low, it is preferable to set the lower limit of the sintering temperature to 800°C.

According to the heating during sintering, Fe that is in the form of a solid solution or is finely precipitated at the nano-scale in the alloy powder aggregates and increases in size, and it is preferable that the average particle diameter of the Fe particles included in the sintered Cu alloy is 5 µm or less. If the average particle diameter of the Fe particles is too large, thermal conductivity will decrease, and if these Fe particles are used in the sintered friction material for use in a high-speed railway, there is a risk that the temperature of the frictional interface will increase, the wear resistance of the friction material will deteriorate, the disk temperature will also increase, and warping will occur in the disc shape. Here, the average particle diameter of the Fe particles was set to 5 µm or less because if it is around 10% of the average particle diameter of the alloy powder, which is the raw material for sintering, it will not hinder the dissipation of frictional heat, which was the original object. If the average particle diameter of the Fe particles is made too small as well, the above-described effect is saturated and the manufacturing cost is increased, and therefore it is practical to set it to 0.1 µm or more.

First, pure Cu and the Cu alloys shown in Table 1 were melted in an induction heating furnace, and the obtained molten material was extracted by a nozzle at the bottom of the furnace and was rapidly cooled in the process of causing it to free fall, and thereby powders having various chemical compositions were obtained. The obtained powder was classified using a 63-µm mesh sieve so as to obtain a powder with an average particle diameter of around 35 µm. Next, the powder was filled in a metallic molding die with an inner diameter of 48 mm and subjected to powder compacting at a pressure of 294 MPa, and thereafter sintered materials were obtained by performing heating processing under various conditions. The sintering was performed by first evacuating the furnace and thereafter introducing Ar gas into it. The rate of temperature increase was set to 10°C per minute, heating was performed until a predetermined temperature was reached, and that temperature was maintained for a predetermined amount of time. The sintering conditions are also shown in Table 1.

The Vickers hardnesses and densities of the obtained sintered materials were examined. The densities were measured using the Archimedes method in accordance with JIS Z8807. The results are shown in Table 1.

The thermal conductivity of some of the sintered materials (examples at 950°C x 1 hour and examples at 1000°C x 1 hour) was measured at room temperature (22°C), 200°C, 400°C, and 600°C using a laser-flash method. The results are also shown in Table 1.

A circular disc-shaped test piece with an outer diameter of 20 mm and a thickness of 4.5 mm was fabricated using machining processing for some of the sintered materials (examples at 1000°C x 1 hour). High-temperature friction and wear tests were performed on the test pieces in the manner described below. The results are also shown in Table 1.

### High temperature friction and wear tests

Using CSM Instruments THT1000, which is commonly used as a testing device, a pin-on disc test (a test in which a pin is pressed onto a disc and wear on the disc at that time is examined) was carried out. The testing conditions are as follows:
Pin: SUJ2 ball (outer diameter 6 mm)
Disc: Sintered Cu-Fe alloy (outer diameter 20 mm x thickness 4.5 mm)
Friction conditions: Load: 5N, rotation radius: 3 mm, rotation speed: 100 rpm, number of rotations: 3000
Testing temperatures: Three, namely room temperature (22°C), 600°C, and 800°C

Note that for the amount of wear, the average wear area was obtained by measuring, at four points (every 90°), the depth of wear marks formed in a circular shape on the disc surface after the test.

**Table 1**

| No. | Powder conditions | | Sintering conditions | | Average particle diameter of Fe particles (µm) | Evaluation | | | | | | | | | | Section |
|---|---|---|---|---|---|---|---|---|---|---|---|---|---|---|---|---|
| | Chemical composition (mass%) | | Temperature (°C) | Time (h) | | Hardness Hv | Density (g/C.C) | Density ratio (%) | Thermal conductivity | | | | Average wear area | | | |
| | Fe | Cu | | | | | | | Room temperature | 200° C | 400° C | 600° C | Room temperature | 600°C | 800°C | |
| 1 | 0.12 | Remainder | 950 | 1.0 | 1.75 | 51.55 | 8.06 | 105.59 | 338 | 307 | 305 | 331 | | | | Present invention example |
| 2 | | | 1000 | 1.0 | 1.50 | 50.86 | 8.16 | 107.01 | 336 | 326 | 320 | 312 | 5,515 | 68,121 | 557,384 | |
| 3 | 0.51 | Remainder | 950 | 1.0 | 2.40 | 44.06 | 8.09 | 105.94 | 179 | 210 | 237 | 269 | | | | |
| 4 | | | 1000 | 1.0 | 2.25 | 44.56 | 8.26 | 108.28 | 188 | 219 | 237 | 258 | 4,312 | 52,051 | 783,000 | |
| 5 | 0.96 | Remainder | 950 | 1.0 | 3.10 | 53.39 | 8.11 | 106.86 | 186 | 211 | 226 | 254 | | | | |
| 6 | | | 1000 | 1.0 | 2.90 | 56.86 | 8.28 | 109.10 | 199 | 225 | 250 | 266 | 1,828 | 49,769 | 274,550 | |
| 7 | 1.84 | Remainder | 950 | 1.0 | 3.50 | 52.07 | 8.11 | 108.63 | 177 | 208 | 234 | 257 | | | | Comparati ve example |
| 8 | | | 1000 | 1.0 | 2.75 | 54.78 | 8.26 | 110.66 | 184 | 213 | 241 | 264 | 99,545 | 19,999 | 413,189 | |
| 9 | 4.99* | Remainder | 950 | 1.0 | 18.00 | 55.09 | 7.65 | 106.90 | 159 | 179 | 200 | 216 | | | | |
| 10 | | | 1000 | 1.0 | - | 64.53 | 8.14 | 112.74 | 164 | 192 | 212 | 231 | | | | |
| 11 | | | 1050 | 1.0 | - | 69.17 | 8.25 | 114.02 | | | | | 134,237 | 60,810 | 331,355 | |
| 12 | Pure Cu | | 950 | 1.0 | - | 42.00 | 7.95 | 113.93 | 357 | 336 | 324 | 320 | | | | |
| 13 | | | 1000 | 1.0 | | 41.67 | 8.20 | 115.84 | 344 | 313 | 311 | 304 | 7,088 | 137,866 | 831,000 | |

| | | | | | | | | | | | | | | | | |
|---|---|---|---|---|---|---|---|---|---|---|---|---|---|---|---|---|
| * Indicates being outside of the scope defined by the present invention | | | | | | | | | | | | | | | | |

As shown in Table 1, the higher the Fe content is, the higher the hardness is. On the other hand, higher the Fe content is, the lower the thermal conductivity is. Also, at room temperature and 800°C, the average wear area reaches a minimum when the Fe content is 0.96%, and at 600°C, the average wear area reaches a minimum when the Fe content is 1.84%.

FIG. 1 is a TEM photograph of Example 6 of the present invention, but as shown in the photograph, it can be understood that the sintered material that satisfies the conditions of the present invention is one in which fine Fe particles are evenly dispersed throughout the entirety of the sintered material. On the other hand, as shown in FIG. 2, in the TEM photograph of Comparative Example 9, it is understood that comparatively large particles exist in an interspersed manner and are not evenly dispersed.

### INDUSTRIAL APPLICABILITY

According to the present embodiment, a sintered material that can have both the high strength and high thermal conductivity needed in a friction material can be obtained at a low cost. The obtained sintered material has superior high wear resistance, and therefore is optimal for use in a sintered friction material for use in a high-speed railway, such as a brake lining for use in a high-speed railway.

## Claims

1. A Cu alloy powder to be used for manufacturing a sintered friction material for use in a high-speed railway, the Cu alloy powder being manufactured by atomizing a Cu alloy containing 0.1 to 2.0 mass% of Fe.

2. A sintered Cu alloy obtained by compacting and sintering a powder including the Cu alloy powder according to claim 1.

3. The sintered Cu alloy body according to claim 2,
wherein an average particle diameter of Fe particles included in the sintered Cu alloy is 5 µm or less.

4. The sintered Cu alloy body according to claim 2 or 3,
wherein a sintering temperature is 1083°C or less.

5. A brake lining for use in a high-speed railway, wherein the sintered Cu alloy body according to any one of claims 2 to 4 is used.
